# EUROPÄISCHE PATENTSCHRIFT

(11) **EP 1 172 596 B1**
(45) Veröffentlichungstag und Bekanntmachung des Hinweises auf die Patenterteilung: **04.08.2004**
(21) Anmeldenummer: 01114196.7
(22) Anmeldetag: 12.06.2001
(51) Int. Cl.: F16L 37/00, H02G 3/06

(54) **Anschlussarmatur mit Spannzange für längliche Körper**
Connecting device with collet for elongated bodies
Dispositif de raccordement avec pince de serrage pour objets allongés

(30) Priorität: 12.07.2000 DE 10033911
(43) Veröffentlichungstag der Anmeldung: 16.01.2002
(73) Patentinhaber: Anton Hummel Verwaltungs GmbH, 79183 Waldkirch (DE)
(72) Erfinder: Bartholomä, Mario, 79297 Winden (DE); Zügel, Fritz, 79183 Waldkirch (DE); Götz, Volker, 79341 Kenzingen (DE); Gerber, Philipp, 79183 Waldkirch (DE)
(74) Vertreter: Maucher, Wolfgang, Dipl.-Ing.

(56) Entgegenhaltungen:
- EP-A- 0 943 856
- EP-A- 0 967 701
- DE-C- 19 738 517

## Beschreibung

Die Erfindung betrifft eine Anschlußarmatur zum Befestigen von länglichen Körpern, beispielsweise von Kabeln, Schläuchen, Rohren, Wellschläuchen oder dergleichen, an einer Öffnung, insbesondere an einem Durchbruch oder an einer Lochung in einer Wand eines Gehäuses, wobei die Anschlußarmatur einen in Einsteckrichtung axial vorstehenden, in Gebrauchsstellung in die Öffnung eingreifenden Stutzen aufweist, der durch im wesentlichen in axialer Richtung verlaufende Schlitze in Haltezungen aufgeteilt ist und durch welchen eine in axialer Richtung über diesen Stutzen vorstehende und sich in Einführrichtung dahinter erweiternde Spannzange vorsteht, die durch eine Rückzugbewegung mit einer Schrägfläche durch die ihr gegenüber engere Innenseite des Stutzens radial zusammendrückbar ist, wobei zum Zurückziehen der Spannzange eine an ihrer Außenseite angeordnete Schraubhülse vorgesehen ist und wobei ferner an dem der Einsteckrichtung zugewandten Öffnungsrand der in der Wand eines Gehäuses oder dergleichen vorgesehenen Öffnung ein Anschlag angeordnet ist, der an diesem Öffnungsrand eine Klemmkraft bewirkt.

Eine derartige Anschlußarmatur ist aus DE 198 28 059 A1 bekannt und hat sich bewährt. Sie hat den Vorteil einer einfachen Montierbarkeit durch das Einführen des Stutzens in die Öffnung und das gleichzeitige Einschnappen der im Querschnitt vergrößerten Spannzange, wobei eine einfache Schraubbewegung an einer Schraubhülse zum Verspannen der Spannzange und zum Festlegen des länglichen Körpers führt. Jedoch ist die Vormontagestellung, in welcher ein länglicher Körper noch nicht verspannt ist, relativ leicht und somit unabsichtlich lösbar oder jedenfalls soweit lösbar, daß die spätere Verspannung ungenau ist, also nicht in der optimalen Gebrauchsstellung zur Wirkung kommt. In einem solchen Falle kann dann nicht die größtmögliche Belastung übertragen und im Falle von einer gleichzeitig festzulegenden Dichtung nicht die vollständige Dichtwirkung erzeugt werden.

Es besteht deshalb die Aufgabe, eine Anschlußarmatur der eingangs genannten Art zu schaffen, bei welcher schon eine Vormontagestellung präzise und sicher festgelegt werden kann, auch wenn der längliche Körper noch nicht oder nicht sofort fixiert werden soll. Durch die Verspannung der Spannzange sollen die bestmöglichen Belastungsverhältnisse praktisch selbsttätig erreichbar sein.

Zur Lösung dieser Aufgabe ist die eingangs definierte Anschlußarmatur dadurch gekennzeichnet, daß der Stutzen der Anschlußarmatur an seinem in Gebrauchsstellung in Einsteckrichtung hinter der Öffnung angeordneten Rand radial abstehende Haltevorsprünge aufweist, die den Rand der Öffnung hintergreifen, daß der Anschlag an einem mittels Gewinde gegenüber der Anschlußarmatur und ihrem Stutzen verstell-baren Schraubring vorgesehen ist und daß die zum Spannen der Spannzange dienende, ihrerseits auf einem Gewinde angeordnete Schraubhülse mit dem Schraubring reibschlüssig derart gekuppelt ist, daß die Drehbewegung der Schraubhülse zum Spannen der Spannzange zu einer Verdrehung des Schraubringes und einer Annäherung des Anschlages an die Gehäusewandung führt, und daß die Schraubhülse weiterdrehbar ist, wenn der Schraubring an der Gehäusewandung anschlägt.

Es wird also eine Schraubhülse zum Spannen der Spannzange und ein Schraubring zum Anschlagen an den der Öffnung benachbarten Wandungsbereich vorgesehen und die beiden Schraubbewegungen werden dadurch kombiniert, daß beim Verdrehen der Schraubhülse der Schraubring mitgenommen wird. Der Benutzer braucht also die Anschlußarmatur nur in die Lochung einrasten zu lassen und kann danach die Schraubhülse zum Anziehen der Spannzange verdrehen, was automatisch dazu führt, daß auch der Schraubring mit dem Anschlag gegen die die Öffnung aufweisende Wandung hin bewegt und verschraubt wird und dort zur Anlagen kommt, also auch automatisch unterschiedliche Dicken der die Öffnung aufweisenden Wandung ausgleichen kann. Da der Schraubring mit der Schraubhülse nur reibschlüssig verbunden ist, kann die Schraubhülse zum endgültigen Verspannen der Spannzange weiterverdreht werden, wenn der Schraubring aufgrund des Anschlagens am Öffnungsrand nicht mehr mitverdreht werden kann. Ab dieser Situation kann dann die Schraubhülse also relativ zu dem Schraubring weitergedreht werden, bis die Spannzange vollständig - gemäß der Dicke des zu erfassenden länglichen Körpers - gespannt ist. Durch die reibschlüssige Kupplung des Schraubringes und der Schraubhülse genügt also eine einzige Schraubbewegung, um unterschiedliche Funktionen zu bewirken, nämlich die Anschlußarmatur an die Dicke der Wand anzupassen, deren Öffnung sie durchsetzt, und die Spannzange zu verspannen, um den länglichen Körper in axialer Richtung festzulegen.

Demgemäß ist auch eine einfache Vormontage dadurch möglich, daß zunächst der Stutzen mit den Haltevorsprüngen der Anschlußarmatur in eine Öffnung einer Wand eines Gehäuses eingeführt und darin verrastet wird, bevor der längliche Körper eingeführt ist. Danach kann durch Verdrehen der Schraubhülse der Anschlag schon in eine Anschlagposition bewegt werden, weil der Schraubring dadurch mitverdreht wird, bevor die Spannzange ihrerseits durch das weitere Verdrehen der Schraubhülse - in gleichbleibender Drehrichtung - gespannt wird. Dabei ist der längliche Körper natürlich spätestens dann in die Anschlußarmatur einzuführen, bevor die lichte Weite der Spannzange auf die Außenabmessung des länglichen Körpers zusammengedrückt ist. Es kann also vor dem endgültigen Spannen der Spannzange die Montage unterbrochen werden, wenn nämlich der Schraubring die Anschlagposition erreicht hat, aber dadurch bereits eine sichere Vormontagestellung der Anschlußarmatur an der entsprechenden Wand eines Gehäuses bewirkt werden.

Ein weiterer Vorteil dieser Anordnung ist dabei darin zu sehen, daß in einer derartigen Vormontagestellung die gesamte Anschlußarmatur schon durch den an der Wand des Gehäuses anliegenden Anschlag gegen ein Mitdrehen gesichert ist, wenn danach durch das weitere Verdrehen der Schraubhülse ein länglicher Körper mit Hilfe der Spannzange erfaßt und festgelegt wird. Umgekehrt kann in dieser Weise auch eine einfache Demontage erfolgen.

Eine besonders einfache und zweckmäßige Ausführungsform der Erfindung kann vorsehen, daß die Schraubhülse am in Einsteckrichtung vorderen Bereich axial benachbart zu ihrem Gewinde eine axial offene Ausnehmung aufweist, die das dem Anschlag abgewandte Ende oder eine dem Anschlag abgewandte Fortsetzung des Schraubringes zumindest teilweise in axialer Richtung reibschlüssig übergreift. Die Schraubhülse kann also den Schraubring durch ihre Ausnehmung außenseitig mit Reibschluß übergreifen, so daß eine Verdrehung der Schraubhülse eine entsprechende Verdrehung des Schraubringes mit dem Anschlag ergibt, bis dieser auf einen Widerstand, nämlich den Rand der Öffnung trifft.

Dabei kann im Kupplungsbereich zwischen Schraubhülse und Schraubring ein die Reibkraft erhöhender oder erzeugender Dichtring oder O-Ring angeordnet sein, der bei der gegenseitigen reibschlüssigen Berührung der Schraubhülse und des Schraubringes an beiden Teilen anliegt. Zwar könnte Reibschluß auch durch eine direkte Verbindung der Schraubhülse und des Schraubringes unter Reib- oder Kraftschluß hergestellt werden, jedoch läßt sich mit einem Dichtring eine höhere Reibkraft und zusätzlich die Funktion einer Abdichtung erzielen, so daß dieser Dichtring eine Doppelfunktion erhält.

Die Ausnehmung an der Schraubhülse kann ein ihrem Innengewinde axial benachbarter zylindrischer Hohlraum sein. Ein zylindrischer Hohlraum als Ausnehmung, der also praktisch konzentrisch auch zu dem Gewinde verläuft, kann einfach hergestellt werden und einen Schraubring an einem entsprechenden Absatz oder Teilbereich gut außenseitig übergreifen.

Das Gewinde für den den Anschlag aufweisenden Schraubring kann in axialer Richtung kürzer als das Gewinde für die Schraubhülse zum Anziehen der Spannzange sein und der Anschlag kann seine Gebrauchsstellung bei der gemeinsamen Verdrehung erreichen, bevor die Spannzange gespannt ist. Durch diese Bemessung der Gewinde kann bewirkt werden, daß der Schraubring seine Anschlagposition einnimmt, bevor die Spannzange zumindest vollständig gespannt ist, so daß in erwünschter Weise zunächst der Dickenausgleich und Anschlag gegenüber der die Öffnung aufweisenden Wand erreicht wird, bevor dann der längliche Körper mit Hilfe der Spannzange endgültig festgelegt wird, so daß die schon beschriebene Vormontagestellung gegenüber der endgültigen Montagestellung auch durch diese unterschiedliche Bemessung der axialen Ausdehnung der Gewinde bewirkt werden kann.

Eine besonders zweckmäßige Ausführungsform mit möglichst wenig Einzelteilen für die erfindungsgemäße Anschlußarmatur kann dabei darin bestehen, daß sie mit dem Stutzen und den Gewinden für den Schraubring und für die Schraubhülse einstückig ist und daß die koaxial zueinander angeordneten Gewinde für die Schraubhülse und für den Schraubring gegensinnig zueinander verlaufen. Schraubring und Schraubhülse greifen also beide an der Anschlußarmatur unmittelbar an, wobei die Schraubhülse dann beispielsweise einen radialen Bund der Spannzange mit ihrer Stirnseite erfaßt und bei ihrer Schraubbewegung weg von der Gehäusewand die Spannzange in die entsprechende gespannte Lage bringt. Eine solche Schraubbewegung führt dann durch die reibschlüssige Verbindung mit dem Schraubring dazu, daß dieser in der entgegengesetzten Richtung in seine Anschlagposition gebracht wird. Durch entsprechende gegenseitige axiale Anordnungen und gegebenenfalls Gewindelängen kann dabei wiederum dafür gesorgt werden, daß der Schraubring mit dem Anschlag seine Gebrauchslage erreicht, bevor die Spannzange gespannt oder vollständig gespannt ist. Für den Benutzer ergibt sich eine sehr bequeme Betätigung, da er lediglich an der Schraubhülse in einer Richtung drehen muß, um sowohl die Anschlußarmatur an der Öffnung festzulegen als auch die Spannzange zu spannen. In vorteilhafter Weise kann dabei die Anschlußarmatur selbst, also eine Hülse, die mit dem Stutzen und Haltevorsprüngen in die Öffnung eingreift und sich auf der in Einsteckrichtung vorderen Seite einer Wand des Gehäuses hülsenartig fortsetzt, aus einem einzigen Teil bestehen, an dessen Außenseite die Schraubhülse und der Schraubring angeordnet sind, während sie im Inneren von der Spannzange und in Gebrauchsstellung von dem länglichen Körper durchsetzt wird.

Für eine möglichst bequeme Betätigung ist es zweckmäßig, wenn das an der Anschlußarmatur vorgesehen Gewinde für die Schraubhülse ein Rechtsgewinde und das Gewinde für den den Anschlag aufweisenden Schraubring ein Linksgewinde sind. Somit kann der Benutzer die Schraubhülse zum Anziehen in der üblichen Weise drehen, in der Schrauben normalerweise zum Anziehen verdreht werden. Dies führt in erwünschter Weise zu einer gegensinnigen Bewegung der Schraubhülse und des reibschlüssig mitgeschleppten Schraubringes, so daß durch eine übliche Drehbewegung die gesamte Anschlußarmatur an der Wand eines Gehäuses angezogen und der längliche Körper eingespannt werden. Die Schraubhülse wirkt dabei auch die Spannzange in der an sich aus der DE 198 28 059 A1 bekannten Weise, wird also von der Wand des Gehäuses durch die Schraubbewegung in axialer Richtung wegbewegt, jedoch wird dadurch gleichzeitig der Schraubring und der Anschlag an die Gehäusewand angedrückt und kann unterschiedliche Wanddicken dieser Gehäusewand relativ zu den Haltevorsprüngen ausgleichen.

Zwischen den beiden gegensinnigen Gewinden kann ein radial vorstehender, in axialer Richtung wirkender Anschlag für die Schraubhülse und/oder für den Schraubring vorgesehen sein und die Schraubhülse und der Schraubring können in einer Ausgangsstellung - vor ihrer Montage und vor einer Vormontagestellunginsbesondere beide an diesem Anschlag anliegen und durch Verdrehen der Schraubhülse gemeinsam in zueinander entgegengesetzte Richtungen von diesem Anschlag wegbewegbar sein. Der Anschlag bewirkt dabei gleichzeitig, daß die Schraubhülse und der Schraubring bei einer Verdrehung in Öffnungsrichtung nicht aneinander zur Anlage kommen und gegebenenfalls sogar gegeneinander gekontert werden. Darüber hinaus ergeben sich definierte Ausgangsstellungen, von denen aus die axiale Erstreckung der beiden Gewinde entsprechend bemessen sein können, um zunächst eine Vormontagestellung erreichen zu können, bevor die Spannzange gespannt oder zumindest endgültig gespannt wird.

Dabei kann die Schraubhülse in Ausgangsstellung mit dem in ihrem Inneren angeordneten Ende ihrer den Schraubring übergreifenden Ausnehmung, insbesondere mit einem etwa radial angeordneten Absatz an dem Anschlag der Anschlußarmatur anliegen. Die Ausnehmung zum reibschlüssigen Übergreifen des Schraubringes kann also an ihrem innenliegenden Ende mit ihrer Stirnseite oder einem dort angeordneten Absatz den Gegenanschlag zur Fixierung der Ausgangsstellung bilden.

Eine zweckmäßige Weiterbildung insbesondere der Ausführungsform mit zwei gegensinnigen Gewinden kann darin bestehen, daß der dem Schraubring in axialer Richtung übergreifende Teil der Schraubhülse, also ihre Ausnehmung, so kurz bemessen ist, daß nach einer Verstellung des Schraubringes in seine Anschlagposition der übergreifende oder reibende Bereich von der Schraubhülse freigegeben wird. Dies bedeutet, daß beim Verdrehen der Schraubhülse der Schraubring mitverdreht und in seine Anschlagposition gebracht wird. Bei einer weiteren Verdrehung der Schraubhülse verläßt diese dann aber den Schraubring, das heißt die reibschlüssige Verbindung zwischen Schraubhülse und Schraubring endet oder wird gelöst, so daß die weitere Schraubbewegung an der Schraubhülse entsprechend leichtgängig und ohne Reibung gegenüber dem Schraubring durchgeführt werden kann, das heißt der Benutzer kann die gesamte Schraubkraft an dem Schraubring nunmehr in die Verspannung der Spannzange umwandeln.

Erleichtert wird diese Betätigung, wenn die Schraubhülse an ihrer Außenseite profiliert und/oder aufgerauht und insbesondere von Hand betätigbar ist. Es könnte aber auch eine Betätigung mit Hilfe eines Werkzeuges vorgesehen werden.

Für die reibschlüssige Kupplung zwischen Schraubring und Schraubhülse ist es vorteilhaft, wenn der Schraubring an seiner Außenseite eine radial offene Nut oder Kammer aufweist, die von der Schraubhülse zumindest in Ausgangslage und während der gemeinsamen Schraubbewegung übergriffen ist, und wenn in dieser Nut oder Kammer der die Reibkraft bewirkende oder verstärkende Dicht- oder O-Ring angeordnet ist. Somit wird dieser Ring in axialer Richtung festgehalten und kann trotz der relativen Axialbewegung beim Verdrehen der Schraubhülse den Schraubring entsprechend mitnehmen. Gleichzeitig bleibt dieser Dichtring in axialer Richtung festgelegt, selbst wenn der übergreifende Bereich der Schraubhülse den Schraubring freigibt. Gegebenenfalls können auch mehrere Dicht- oder O-Ringe in einer entsprechend groß bemessenen Kammer untergebracht sein, um so die Reibkräfte eventuell auch abzustufen.

Eine abgewandelte, ebenfalls zweckmäßige Ausführungsform der Erfindung kann vorsehen, daß die Spannzange die Anschlußarmatur und den Gewindebereich für den Schraubring auf der der Öffnung abgewandten Seite axial überragt und zumindest in diesem überstehenden Bereich selbst ein Außengewinde für den Angriff der Schraubhülse hat und daß das Außengewinde der Spannzange für die Schraubhülse und das Außengewinde der Anschlußarmatur für den Schraubring unterschiedliche Durchmesser haben und gleichsinnig, insbesondere Rechtsgewinde, sind. In diesem Falle bewirkt also eine Verdrehung der Schraubhülse aufgrund des Reibschlusses eine Verdrehung des Schraubringes in derselben Drehrichtung, so daß auch die axiale Bewegung gleichgerichtet ist. Da in diesem Falle aber die Schraubhülse unmittelbar an der Spannzange angreift, kann durch eine entsprechende Abstützung der Schraubhülse die Spannzange axial in ihre Spannstellung gezogen werden. Durch entsprechende Bemessung der Gewindelängen kann dabei wiederum erreicht werden, daß der an der Anschlußarmatur selbst verschraubbare, den Anschlag aufweisende Schraubring seine Anschlagposition erreicht, bevor die Spannzange ganz oder teilweise gespannt ist.

Bei dieser Ausführungsform ist es zweckmäßig, wenn der die Ausnehmung zum Übergreifen des Schraubringes axial begrenzende Boden oder Gegenanschlag der Schraubhülse die dem Anschlag an dem Schraubring abgewandte Stirnseite dieses Schraubringes oder Gewinderinges reibschlüssig berührt. Da die Schraubhülse und der Schraubring bei der gegenseitigen Verschraubung eine übereinstimmende axiale Relativbewegung durchführen, ist eine derartige in axialer Richtung wirkende Reibfläche zweckmäßig.

Dabei kann zwischen dem Boden der Ausnehmung der Schraubhülse und der dem Anschlag abgewandten Stirnseite des Schraubringes ein die Reibkraft erzeugender oder erhöhender Dichtring oder O-Ring angeordnet sein, das heißt auch bei dieser Ausführungsform kann mit Hilfe eines solchen Dichtringes einerseits die Reibung eingestellt und bewirkt und gleichzeitig eine Dichtwirkung erzielt werden.

Der den Anschlag aufweisende und zum Ausgleich der Wanddicke an der Öffnung dienende Schraubring kann an seiner Umfangs- oder Außenseite profiliert und/oder aufgerauht und zum Lösen aus seiner Anschlagposition insbesondere von Hand verdrehbar sein. Ist dieser Schraubring in Anschlagposition relativ fest angezogen, könnte unter Umständen die von der Schraubhülse ausgehende Reibkraft nicht ausreichen, um ihn zu lösen. Somit kann bei einer in der Regel seltenen Demontage an dem Schraubring selbst unmittelbar entweder mit einem Werkzeug oder insbesondere von Hand angegriffen werden.

Dabei kann die Profilierung oder Aufrauhung an einem Außenbereich des Schraubringes angeordnet sein, der dem von der Schraubhülse übergriffenen Bereich in axialer Richtung benachbart ist. Somit bleibt dieser Bereich in jeglicher gegenseitiger Position von Schraubring und Schraubhülse zugänglich.

Die Schraubhülse kann eine Mutter, insbesondere bei einer Ausführungsform, bei welcher sie unmittelbar an der Spannzange angreift, eine Hutmutter sein, deren Durchgangsöffnung für den festzulegenden länglichen Körper ausreichend groß bemessen ist.

Vor allem bei Kombination einzelner oder mehrerer der vorbeschriebenen Merkmale und Maßnahmen ergibt sich eine Anschlußarmatur, bei welcher die Vorteile der Anschlußarmatur gemäß DE 198 28 059 beibehalten bleiben, die aber gleichzeitig eine gute und feste Vormontageposition erlaubt, die durch einen einzigen Betätigungsvorgang durch Verdrehen der Schraubhülse erreicht werden kann. Darüber hinaus bewirkt die weitere Verdrehung der Schraubhülse in gleichbleibender Richtung dann in einer weiteren Stufe des Montagevorganges das Festziehen der Spannzange gegenüber einem durch die Anschlußarmatur geführten länglichen Körper, insbesondere eines Kabels. Obwohl also der Anschlag der Anschlußarmatur gegenüber der Außenseite eines Gehäuses zum Ausgleich der Wanddicke durch einen Schraubvorgang festgelegt werden kann, also die Anschlußarmatur an Öffnungen in unterschiedlich dicken Wandungen einsetzbar ist, und zum Anziehen der Spannzange ebenfalls ein Schraubvorgang vorgesehen ist, braucht der Benutzer nur eine einzige Drehbewegung an der Schraubhülse lange genug durchzuführen, um beide unterschiedlichen Funktionen in sinnvoller Weise nacheinander zu erzielen. Somit ergibt sich eine sehr anpassungsfähige und dennoch einfach montierbare und auch demontierbare Anschlußarmatur.

Nachstehend sind Ausführungsbeispiele der Erfindung anhand der Zeichnung näher beschrieben. Es zeigt in zum Teil schematisierter Darstellung:
- Fig. 1: eine teilweise im Längsschnitt gehaltene Seitenansicht der einzelnen Teile einer Ausführungsform der erfindungsgemäßen Anschlußarmatur, die dabei zwei gegensinnige Gewinde für eine Schraubhülse und einen Schraubring aufweist, vor ihrem Zusammensetzen und vor ihrer Montage,
- Fig. 2: eine aus den einzelnen Teilen der Fig.1 zusammengesetzte Anschlußarmatur in vormontiertem Zustand vor dem Einführen und Einrasten in eine Öffnung einer - relativ dünnen - Wand,
- Fig. 3: die Anschlußarmatur gemäß Fig.2 nach dem Einführen in die Öffnung an der relativ dünnen Wand und nach einer Verschraubung der Schraubhülse, wodurch der Schraubring in seine Anschlagposition gelangt ist,
- Fig. 4: eine der Fig.3 entsprechende Darstellung, wobei die Öffnung an einer relativ dicken Wand vorgesehen ist, so daß eine geringere Verdrehung des Schraubringes diesen bereits in Anschlagsposition gebracht hat, sowie
- Fig. 5: eine Anschlußarmatur nach dem Festlegen eines länglichen Körpers und dem weiteren Verschrauben der Schraubhülse, wodurch die Spannzange mit dem länglichen Körper verklemmt wurde,
- Fig. 6: eine teilweise im Längsschnitt gehaltene Seitenansicht der Einzelteile einer abgewandelten Ausführungsform der erfindungsgemäßen Anschlußarmatur, wobei die Spannzange selbst ein Außengewinde zum Zusammenwirken mit einer Schraubhülse hat und den Gewindebereich der Anschlußarmatur für den Schraubring in Gebrauchsstellung überragt,
- Fig. 7: die Anschlußarmatur gemäß Fig.6 in vormontiertem und mit einer Öffnung einer Wand bereits verrasteten Position vor dem Einführen eines festzulegenden länglichen Körpers, nämlich eines Kabels, sowie
- Fig. 8: die endgültige Montageposition der Anschlußarmatur gemäß Fig.6 und 7 nach dem Einführen des Kabels und dem Verspannen der Spannzange durch weiteres Anziehen der als Hutmutter ausgebildeten Schraubhülse.

Bei der nachfolgenden Beschreibung der unterschiedlichen Ausführungsbeispiele erhalten in ihrer Funktion übereinstimmende Teile auch bei unterschiedlicher konstruktiver Gestaltung übereinstimmende Bezugszahlen.

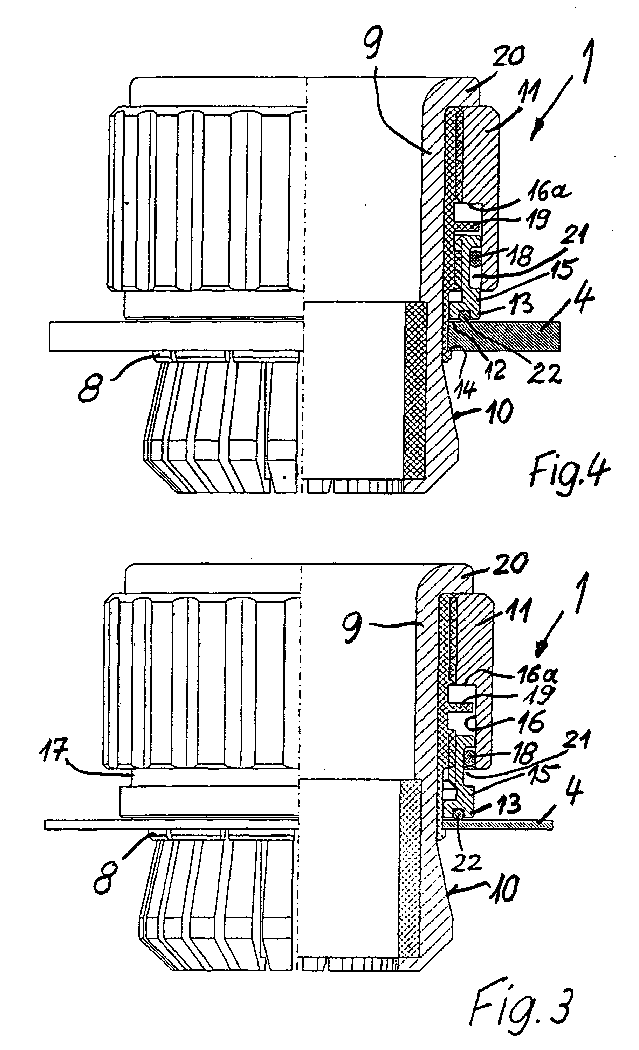

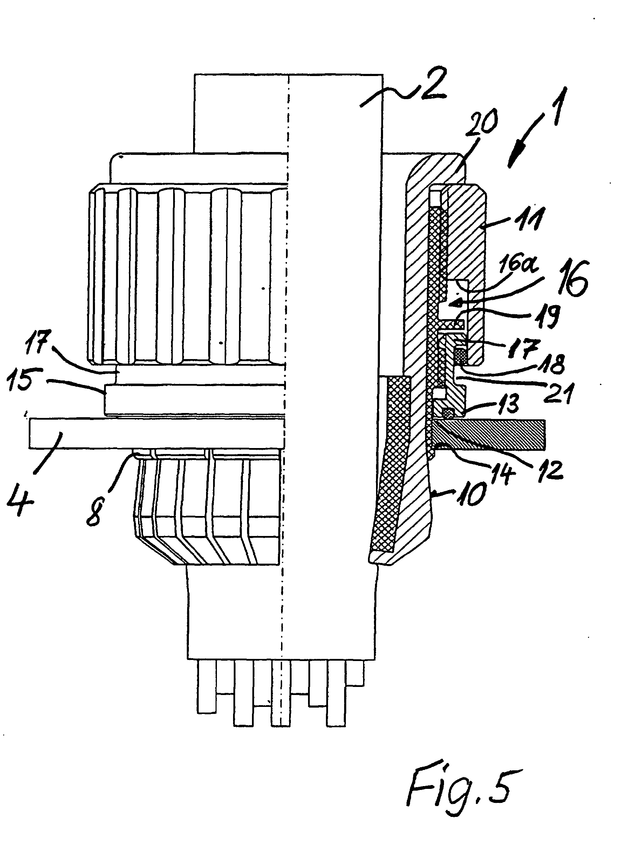

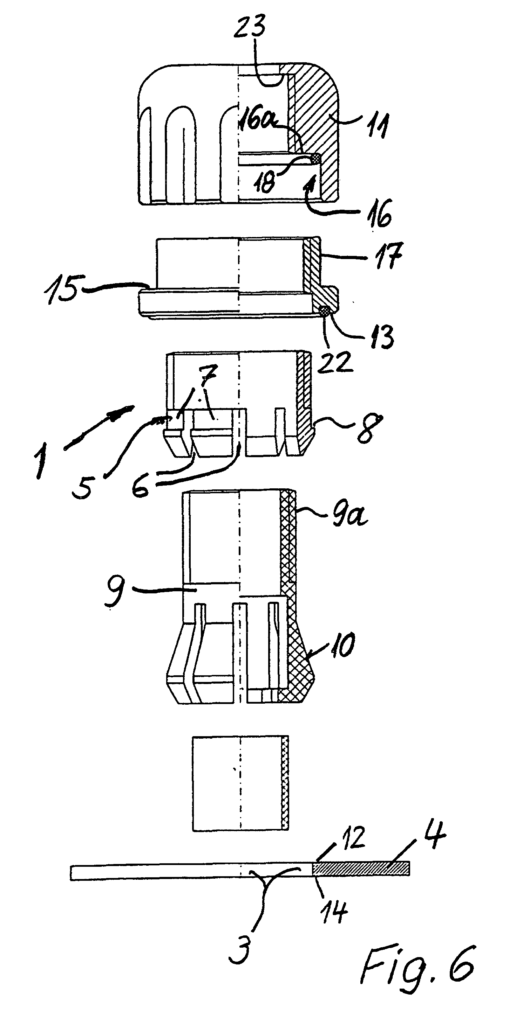

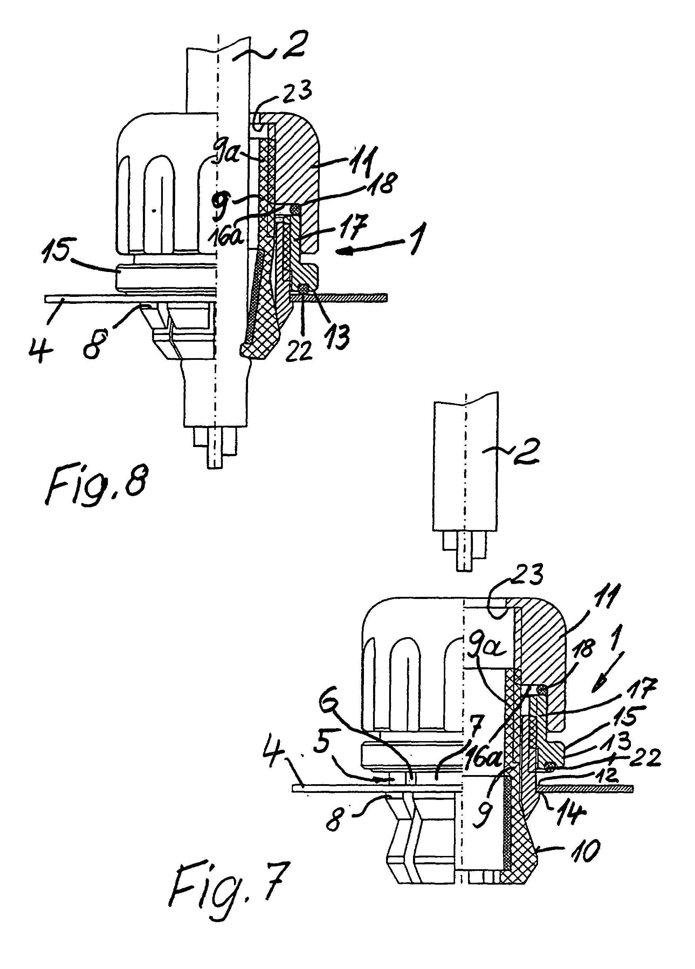

Eine in beiden Ausführungsbeispielen im ganzen mit 1 bezeichnete Anschlußarmatur dient gemäß Fig.5 und 8 zum Befestigen von länglichen Körpern, in den genannten Ausführungsbeispielen von Kabeln 2, an einer Öffnung 3, die im Ausführungsbeispiel ein Durchbruch oder eine Lochung in einer Wand 4 eines Gehäuses ist. Dabei kann die Dicke dieser Wand 4 verschieden sein wie der Vergleich der Figuren 3 und 4 und auch der Vergleich der Figuren 6 und 7 andeutet.

Die Anschlußarmatur 1 hat dabei in beiden Ausführungsbeispielen einen einstückig mit ihr verbundenen, in Einsteckrichtung axial vorstehenden, in Gebrauchsstellung (Fig. 3 und 4 sowie Fig. 7 und 8) in die Öffnung 3 eingreifenden Stutzen 5, der durch in axialer Richtung verlaufende Schlitze 6 in Haltezungen 7 aufgeteilt ist, die jeweils an ihrem in Einsteckrichtung hinter der Öffnung 3 angeordneten Bereich oder Rand radial abstehende Haltevorsprünge 8 aufweisen. Der Stutzen 5 wird von einer Spannzange 9 durchsetzt, die sich in Einführrichtung hinter dem Stutzen 5 erweitert und dabei außenliegende Schrägflächen 10 hat, durch welche sie gegenüber der engeren Innenseite des Stutzens 5 bei einer axialen Rückzugbewegung radial zusammendrückbar ist. Mit einem schlankeren Bereich ragt die Spannzange 9 gleichzeitig aber auch in die Anschlußarmatur 1 und durch diese auf der der Einsteckrichtung zugewandten Seite hindurch. Ihre axiale Länge ist also -in beiden Ausführungsbeispielen - größer als die der Anschlußarmatur 1.

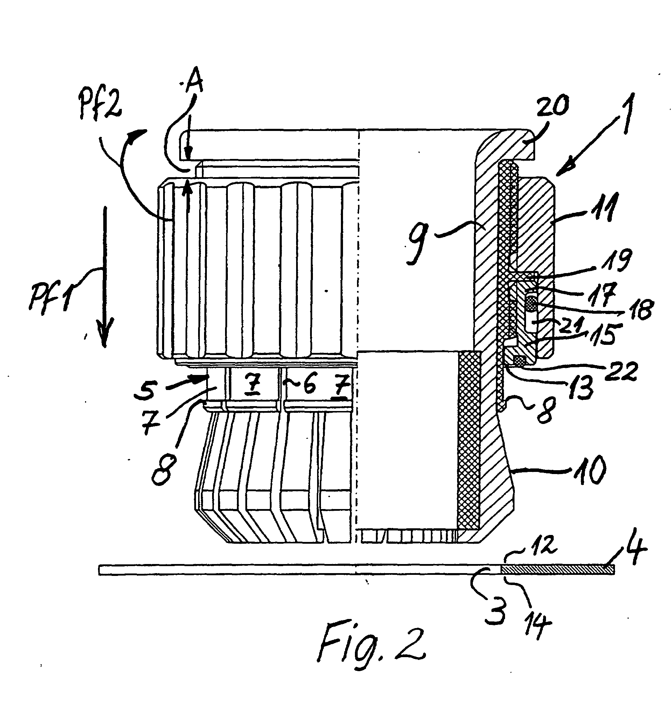

Zum Zurückziehen der Spannzange 9 entgegen der in Fig.2 durch den Pfeil Pf1 markierten Einsteckrichtung ist eine an der Außenseite der Spannzange 9 angeordnete und in noch zu beschreibender Weise angreifende Schraubhülse 11 vorgesehen, deren Verdrehung gegenüber einem Außengewinde gleichzeitig eine axiale Verstellbewegung bewirkt, die zum Zurückziehen und damit zum Spannen der Spannzange 9 benutzt werden kann.

Ferner ist bei beiden Ausführungsbeispielen vorgesehen, daß an dem der Einsteckrichtung zugewandten Öffnungsrand 12 der in der Wand 4 vorgesehenen Öffnung 3 ein Anschlag 13 angeordnet ist, mit welchem die gesamte Anschlußarmatur 1 an dieser Wand 4 in Gebrauchsstellung fest anliegt und der zusammen mit den Haltevorsprüngen 8 an diesem Öffnungsrand 12 eine Klemmkraft bewirkt. Dabei hintergreifen diese Haltevorsprünge 8 in Gebrauchsstellung den der Einsteckrichtung abgewandten Rand 14 der Öffnung 3 in Gebrauchsstellung, so daß sich der Rand 14 und der Öffnungsrand 12 also zwischen den Haltevorsprüngen 8 und dem Anschlag 13 befinden.

In beiden Ausführungsbeispielen ist der Anschlag 13 an einem mittels Gewinde gegenüber der Anschlußarmatur 1 und ihrem Stutzen 5 axial verstellbaren Schraubring 15 vorgesehen und die zum Spannen der Spannzange 9 dienende, ihrerseits auf einem Gewinde angeordnete Schraubhülse 11 ist mit diesem Schraubring 15 kraft- oder reibschlüssig derart gekuppelt, daß die Drehbewegung der Schraubhülse 11 zum Spannen der Spannzange 9 gleichzeitig zu einer Verdrehung des Schraubringes 15 und einer axialen Annäherung seines Anschlages 13 an die Gehäusewand 4 führt. Beim Verdrehen der Schraubhülse 11 wird also der Schraubring 15 durch Kraftoder Reibschluß mitgenommen und gleichzeitig verdreht. Aufgrund des Reibschlusses ist aber die Schraubhülse 11 auch dann weiterverdrehbar, wenn der Schraubring 15 und der an ihm befindliche Anschlag 13 an der Gehäusewand 4 zur Anlage kommt beziehungsweise anschlägt.

Es ist also möglich, die zunächst gemäß Fig.2 vormontierte Anschlußarmatur 1 in die Öffnung 3 der Wand 4 in Richtung des Pfeiles Pf1 einzustecken, wobei die geschlitzten Teile der Spannzange 9 und die Haltezungen 7 des Stutzens 5 radial nachgeben können. Danach kann die Schraubhülse 11 betätigt werden, was gleichzeitig dazu führt, daß der Schraubring 15 mitgenommen und an der Wand 4 zur Anlage gebracht wird, wobei eine längere Axialbewegung bei einer relativ dünnen Wand gemäß Fig.3 und eine entsprechend kürzere Axialbewegung und demgemäß auch eine kürzere Verschraubung bei einer dickeren Wand 4 gemäß Fig.4 erforderlich sind. Es erfolgt also automatisch auch ein Ausgleich der Dicke der Wand 4 beziehungsweise eine Anpassung an dieser Wanddicke.

Eine weitere Verdrehung der Schraubhülse 11 ist möglich, obwohl der Schraubring 15 nach dem Anschlagen an der Wand 4 nicht mehr mitgenommen wird, weil zwischen der Schraubhülse 11 und dem Schraubring 15 nur Reibschluß besteht. Somit kann die Schraubhülse weiterverdreht werden, um die Spannzange in axialer Richtung entgegen der Einführrichtung zu bewegen und dadurch ihre Zusammendrückung zu bewirken, die in den Figuren 5 und 8 deutlich dargestellt ist.

Der Benuter braucht also nur die Schraubhülse 11 in gleichbleibender Richtung zu verdrehen, um einerseits die unterschiedlichen Dicken der Wand 4 auszugleichen und die Anschlußarmatur 1 an der Öffnung 3 der Wand 4 festzulegen und bei einer weiteren Verdrehung dann auch die Spannzange 9 zusammenzudrücken, so daß ein inzwischen eingeführter länglicher Körper oder ein Kabel 2 gemäß den Figuren 5 und 8 festgeklemmt und festgelegt werden kann.

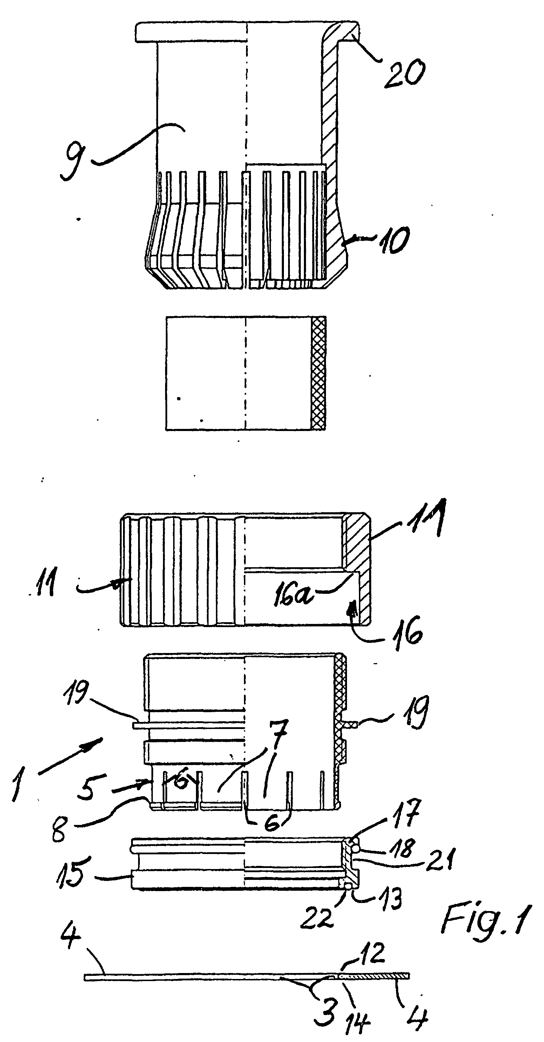

In beiden Ausführungsbeispielen weist die Schraubhülse 11 am in Einsteckrichtung vorderen Bereich axial benachbart zu ihrem Innengewinde eine axial offene Ausnehmung 16 auf (Fig.1 und 6), die das dem Anschlag 13 abgewandte Ende oder eine dem Anschlag abgewandte Fortsetzung 17 des Schraubringes 15 zumindest teilweise in axialer Richtung reibschlüssig übergreift, insbesondere in der in Fig.2 und auch in Fig.7 dargestellten Ausgangslage. Wird die Schraubhülse 11 verdreht, nimmt sie aufgrund dieser reibschlüssigen Verbindung den Schraubring 15 in übereinstimmender Drehrichtung mit, so daß dieser durch sein eigenes Gewinde eine Axialbewegung durchführen kann, bis der Anschlag 13 an der Wand 4 zur Anlage kommt.

Im Kupplungsbereich zwischen der Schraubhülse 11 und dem Schraubring 15 ist dabei in beiden Ausführungsbeispielen ein die Reibkraft erhöhender oder erzeugender Dichtring, im Ausführungsbeispiel ein O-Ring 18 angeordnet, der bei der gegenseitigen reibschlüssigen Berührung an beiden Teilen anliegt, wie man es in den Figuren 2 bis 5 einerseits und in den Figuren 7 und 8 andererseits deutlich erkennt. Dieser O-Ring 18 hat also eine Doppelfunktion, indem er einerseits die gewünschte Reibung bewirkt und andererseits diesen Berührbereich abdichtet.

Dabei ist die Ausnehmung 16 an der Schraubhülse 11 ein ihrem Innengewinde benachbarter zylindrischer Hohlraum, der also eine entsprechende zylindrische Fortsetzung 17 an dem Schraubring 15 außenseitig übergreifen kann.

Das Gewinde für den den Anschlag 13 aufweisenden Schraubring beziehungsweise der axiale Verstellweg für diesen Schraubring 15 ist in axialer Richtung kürzer als das Gewinde oder der Verstellweg für die Schraubhülse 11 zum Anziehen der Spannzange 9. Dadurch wird bewirkt, daß der Anschlag 13 seine Gebrauchsstellung bei der gemeinsamen Verdrehung erreicht, bevor die Spannzange 9 ganz oder teilweise gespannt ist. Bei geschickter gegenseitiger Anordnung kann erreicht werden, daß während einer ersten Verdrehung der Schraubhülse 15 die Spannzange noch gar nicht axial zurückgezogen und verspannt wird, sondern daß diese Spannbewegung erst einsetzt, wenn der Anschlag 13 des Schraubringes 15 seine Anschlagposition erreicht hat.

Die beiden Ausführungsbeispiele gemäß Fig.1 bis 5 einerseits und gemäß Fig.6 bis 8 andererseits sind teilweise unterschiedlich gestaltet.

Beim Ausführungsbeispiel gemäß den Figuren 1 bis 5 ist vorgesehen, daß die Anschlußarmatur 1 mit dem Stutzen 5 und den beiden Gewinden für den Schraubring 15 und für die Schraubhülse 11 einstückig ist, was besonders gut in Fig. 1 zu erkennen ist. Die koaxial zueinander angeordneten Außengewinde an der Anschlußarmatur 1 verlaufen dabei gegensinnig zueinander. Bevorzugt kann dabei das an der Anschlußarmatur 1 vorgesehene Gewinde für die Schraubhülse 11, welches in axialer Richtung von dem Stutzen 5 weiter entfernt ist, ein Rechtsgewinde und das Gewinde für den den Anschlag 13 aufweisenden Schraubring 15 ein Linksgewinde sein. Wird von der Ausgangslage gemäß Fig. 2 ausgehend der Schraubring im Uhrzeigersinn (Pf2) verdreht, führt eine solche Gewindekonstellation dazu, daß sich der Schraubring 15 der Wand 4 nähert, während sich die Schraubhülse 11 davon entfernt. Dabei durchläuft die Schraubhülse 11 aber zunächst einen Leerweg A oder Abstand, der nachstehend noch erläutert wird, so daß also zunächst der Schraubring 15 mit den Anschlag 13 in die in Fig. 3 und 4 dargestellte Gebrauchsstellung gelangt, wobei mehr Umdrehungen notwendig sind, um die relativ dünne Wand 4 gemäß Fig.3 zu erreichen, während die dickere Wand 4 weniger Umdrehungen erforderlich macht. Es kann also schon bei dieser Verschraubung auch automatisch eine Anpassung an unterschiedliche Wanddicken erfolgen. Günstig ist dabei, daß aufgrund des an der Schraubhülse 11 wirksamen Rechtsgewindes diese in üblicher Weise im Uhrzeigersinn verdreht werden kann, wie dies bei der Mehrzahl von Schrauben und Schraubverbindungen der Fall ist.

Dabei erkennt man in den Figuren 1 bis 5 zwischen den beiden gegensinnigen Gewinden einen radial vorstehenden, in axialer Richtung wirkenden Anschlagvorsprung 19, der in diesem Falle ein am gesamten Umfang umlaufender Anschlagring ist und als Anschlag sowohl für die Schraubhülse 11 als auch für den Schraubring 15 dient, wie es vor allem in Fig. 2 deutlich wird. In Ausgangsstellung gemäß Fig.2 liegen also die Schraubhülse 11 und der Schraubring 15 beide an diesem Anschlagvorsprung 19 an, allerdings jeweils auf einander entgegengesetzten Seiten. Durch Verdrehen der Schraubhülse 11 bewegen sich dann die beiden Teile gemeinsam in entgegengesetzten Richtungen von diesem Anschlagvorsprung 19 in axialer Richtung weg. Demgemäß sind sie in den Figuren 3 und 4 beide von diesem Anschlagvorsprung 19 beabstandet, wobei der Abstand in Fig. 3 deshalb größer ist, weil der Schraubring 15 einen größeren axialen Weg zurücklegen mußte, bis er an der dünneren Wand 4 zur Anlage kommt, als dies bei Fig.4 der Fall ist.

Die Schraubhülse 11 liegt dabei in Ausgangsstellung mit dem in ihrem Inneren angeordneten Ende ihrer den Schraubring übergreifenden Ausnehmung 16, nämlich mit einem etwa radial angeordneten Absatz 16a an dem radial vorstehenden Anschlagvorsprung 19 der Anschlußarmatur 1 an, das heißt die Ausnehmung 16 übergreift zumindest in dieser Ausgangslage auch den Anschlagvorsprung 19.

In Fig.2 erkennt man außerdem, daß die mit dem Schraubring 15 reib- oder kraftschlüssig verbundene Schraubhülse 11 in der darstellten Ausgangsstellung zu einem von ihr zu beaufschlagenden Vorsprung oder Bund 20, der einstückig mit dem in Einsteckrichtung vordersten Ende der Spannzange 9 verbunden ist, einen axialen Abstand A hat, der in den Montagestellungen gemäß Fig.3 bis 5 verschwunden ist. Wird der Schraubring 15 nach dem Einstecken der vormontierten und in Fig.2 dargestellten Anschlußarmatur 1 in Richtung des Pfeiles Pf1 in die Öffnung 3 im Sinne einer Verspannung und Fixierung verdreht, bewegt sie sich auf ihrem Gewinde in axialer Richtung entgegen der Einsteckrichtung, während der Schraubring 15 in dieser Einsteckrichtung bis zu der Wand 4 verstellt wird. Bis dabei dieser Abstand A überbrückt oder beseitigt ist, erfolgt also noch keinerlei Rückzugsbewegung an der Spannzange 9, so daß diese während dieser Betätigung unverspannt bleibt. Somit kann nach der Einstellung der Position gemäß Fig. 3 oder 4 das Kabel 2 problemlos eingeführt und durch eine weitere Verdrehung der Schraubhülse 11 anschließend, wie in Fig.5 dargestellt, verspannt werden, weil nunmehr die durch das Verdrehen bewirkte axiale Bewegung der Schraubhülse 11 von der Wand 4 weg den Bund 20 an der Spannzange 9 in dieser Richtung mitnimmt, so daß die Spannzange 9 in den Stutzen 5 hineingezogen und aufgrund der axial geschlitzten Schrägflächen 10 radial einwärts verformt wird, so daß sie das Kabel 2 festklemmt.

Der den Schraubring 15 in axialer Richtung übergreifende Teil der Ausnehmung 16 an der Schraubhülse 11 bleibt dabei auch in dieser Gebrauchsstellung noch im gegenseitigen Eingriff. Er könnte aber so kurz bemessen sein, daß nach der Verstellung des Schraubringes 15 in seine Anschlagposition dieser übergriffene oder reibende Bereich von der Schraubhülse 11 freigegeben wird, so daß deren weitere Verstellbewegung ohne die Reibung gegenüber dem Schraubring 15 durchgeführt werden kann.

In den Zeichnungen ist angedeutet, daß die Schraubhülse 11 in allen Ausführungsbeispielen an ihrer Außenseite profiliert und aufgerauht ist, so daß sie auch von Hand betätigt werden kann. Dies erleichtert die Handhabung der Anschlußarmatur 1 bei ihrer Montage und auch bei ihrer umgekehrt ablaufenden Demontage.

Der Schraubring 15 des Ausführungsbeispieles gemäß Fig.1 bis 5 weist an seiner Außenseite eine radial offene Nut oder Kammer 21 auf, die von der Schraubhülse 11 in Ausgangsstellung und während der gemeinsamen Schraubbewegung übergriffen ist. In dieser Nut oder Kammer 21 ist dabei der die Reibkraft bewirkende oder verstärkende Dicht- oder O-Ring 18 angeordnet und gegen ein Herausdrücken gesichert.

Die Anschlußarmatur 1 des Ausführungsbeispieles gemäß den Figuren 6 bis 8 sieht vor, daß in diesem Falle die Spannzange 9 die eigentliche Anschlußarmatur 1 und den Gewindebereich für den Schraubring 15 gemäß Fig.7 und 8 auf der der Öffnung 4 abgewandten Seite axial überragt und zumindest in diesem überstehenden Bereich 9a selbst ein Außengewinde für den Angriff der Schraubhülse 11 hat, das heißt die Schraubhülse 11 ist in diesem Falle auf einem Gewinde der Spannzange 9 selbst verdrehbar und verschraubbar, statt die Spannzange 9 indirekt über einen radial vorstehenden Bund 20 axial zu betätigen.

Da die Spannzange mit ihrem ein Außengewinde aufweisenden Bereich 9a über die Anschlußarmatur 1 und deren das Gewinde für den Schraubring 15 aufweisenden Teil axial entgegen der Einsteckrichtung übersteht, hat dieses Außengewinde der Spannzange 9 für die Schraubhülse 11 einen kleineren Durchmesser als das Außengewinde der Anschlußarmatur 1 für den Schraubring 15. Außerdem sind beide Gewinde gleichsinnig und insbesondere als Rechtsgewinde ausgeführt, so daß die Schraubhülse 11 zum Fixieren des Anschlages 13 und zum Spannen der Spannzange 9 wiederum im Uhrzeigersinn verdreht werden kann. Der die Ausnehmung 16 zum Übergreifen des Schraubringes 15 axial begrenzende Boden oder Absatz 16a der Schraubhülse 11 berührt dabei reibschlüssig die dem Anschlag 13 an dem Schraubring 15 abgewandte Stirnseite, was in den Figuren 7 und 8 deutlich erkennbar ist. Zusätzlich können aber auch die sich in axialer Richtung übergreifenden Bereiche radial reibschlüssig berühren.

Zwischen dem Boden oder Absatz 16a der Ausnehmung 16 der Schraubhülse 11 und der dem Anschlag 13 abgewandten Stirnseite des Schraubringes 15 erkennt man wieder einen die Reibkraft erzeugenden oder erhöhenden Dichtring oder O-Ring 18.

Wird die Schraubhülse 11 gemäß dem Ausführungsbeispiel nach Fig.6 bis 8 aus der in Fig.7 dargestellten Ausgangslage im Urzeigersinn verdreht, nimmt sie den reibschlüssig mit ihr verbundenen Schraubring 15 in derselben Drehrichtung mit, so daß sich beide Schraubteile in axialer Richtung der Wand 4 nähern, bis der Schraubring 15 mit dem Anschlag 13, der in beiden Ausführungsbeispielen ebenfalls einen Dichtring 22 enthalten kann, an der Wand 4 zur Anlage kommt und deshalb nicht mehr weiter in axialer Richtung verstellt und nicht mehr weiter verdreht werden kann. Eine weitere Verdrehung der Schraubhülse 11 bewirkt dann aufgrund ihres axialen Stillstandes bei gleichzeitiger weiterer Verdrehung, daß die Spannzange 9 aufgrund der gegenseitigen Gewindeverbindung mit dieser Schraubhülse 11 in axialer Richtung in diese Schraubhülse 11 und in den Stutzen 5 der Anschlußarmatur 1 hineingezogen und aufgrund ihrer außenliegenden Schrägflächen 10 und der dazwischen befindlichen Axialschlitze radial zusammengedrückt wird, wie es in Fig. 8 erkennbar ist. Ein zuvor eingesteckter länglicher Körper, zum Beispiel das Kabel 2, wird somit in radialer Richtung erfaßt und festgeklemmt.

Der den Anschlag 13 aufweisende und zum Ausgleich der Wanddicke an der Öffnung 3 dienende Schraubring 15 ist dabei an seiner Außenseite glatt ausgebildet, könnte aber auch profiliert und/oder aufgerauht sein, damit er insbesondere beim Lösen aus seiner Anschlagposition bei einer Demontage von Hand oder auch mit einem Werkzeug verdreht werden könnte, falls die Reibung an dem Anschlag 13 eventuell größer als die zwischen der Schraubhülse 11 und dem Schraubring 15 wäre.

Es sei noch erwähnt, daß im Ausführungsbeispiel gemäß Fig.6 bis 8 die Schraubhülse 11 eine Hutmutter ist, die an ihrer Durchgangsöffnung noch einen radialen Anschlag 23 für die Spannzange 9 aufweist, so daß diese bei ihrer axialen Verstellung nicht aus der Schraubhülse 11 oder Hutmutter austreten kann.

Die Anschlußarmatur 1 dient zum Befestigen von länglichen Körpern, beispielsweise von Kabeln 2 oder auch Schläuchen, Rohren, Wellschläuchen oder dergleichen, an einer Öffnung 3, die beispielsweise ein Durchbruch oder eine Lochung in einer Wand 4 eines Gehäuses sein kann. Die Anschlußarmatur 1 weist eine die Öffnung 3 in Gebrauchsstellung durchsetzende und sich dahinter erweiternde Spannzange 9 auf, die durch eine Rückzugsbewegung entgegen der Einführrichtung also radial zusammendrückbar und mit dem länglichen Körper verklemmbar ist. Für diese Rückzugsbewegung der Spannzange ist eine Schraubhülse 11 vorgesehen, die reiboder kraftschlüssig mit einem Schraubring 15 verbunden ist, der durch die erwähnte Schraubbewegung der Schraubhülse 11 seinerseits mitgeschleppt und mitverdreht und auf seinem Gewinde entsprechend axial verstellt wird, bis er die Wand 4 an dem Öffnungsrand 12 erreicht und dort anschlägt. Somit wird automatisch die jeweilige Dicke der Wand 4 berücksichtigt. Eine weitere Verdrehung der Schraubhülse 11 ist aufgrund der reibschlüssigen Kupplung mit dem Schraubring 15 möglich, so daß die Spannzange 9 nach dem Erreichen der Anschlagposition des Schraubringes 15 gegenüber einer schon begonnenen Spannbewegung weiterverspannt werden kann oder die Spannbewegung aufgrund entsprechender axialer Abmessungen der Gewinde erst danach beginnt. Für den Benutzer ist also lediglich erforderlich, die Schraubhülse 11 in gleichbleibender Richtung zu verdrehen, um eine Anpassung der Anschlußarmatur 1 an die Dicke der Wand 4 zu bewirken und den länglichen Körper 2 mit der Spannzange 9 festzulegen.

## Patentansprüche

1. Anschlußarmatur (1) zum Befestigen von länglichen Körpern, beispielsweise von Kabeln (2), Schläuchen, Rohren, Wellschläuchen oder dergleichen, an einer Öffnung (3), insbesondere an einem Durchbruch oder an einer Lochung in einer Wand (4) eines Gehäuses, wobei die Anschlußarmatur (1) einen in Einsteckrichtung axial vorstehenden, in Gebrauchsstellung in die Öffnung (3) eingreifenden Stutzen (5) aufweist, der durch im wesentlichen in axialer Richtung verlaufende Schlitze (6) in Haltezungen aufgeteilt ist und durch welchen eine in axialer Richtung über diesen Stutzen (5) vorstehende und sich in Einführrichtung dahinter erweiternde Spannzange (9) vorsteht, die durch eine Rückzugbewegung mit einer Schrägfläche (10) durch die ihr gegenüber engere Innenseite des Stutzens (5) radial zusammendrückbar ist, wobei zum Zurückziehen der Spannzange (9) eine an ihrer Außenseite angeordnete Schraubhülse (11) vorgesehen ist, und wobei ferner an dem der Einsteckrichtung zugewandten Öffnungsrand (12) der in der Wand (4) eines Gehäuses oder dergleichen vorgesehenen Öffnung (3) ein Anschlag (13) angeordnet ist, der an diesem Öffnungsrand (12) eine Klemmkraft bewirkt, **dadurch gekennzeichnet, daß** der Stutzen (5) der Anschlußarmatur (1) an seinem in Gebrauchsstellung in Einsteckrichtung hinter der Öffnung (3) angeordneten Bereich radial abstehende Haltevorsprünge (8) aufweist, die den Rand (14) der Öffnung (3) hintergreifen, daß der Anschlag (13) an einem mittels Gewinde gegenüber der Anschlußarmatur (1) und ihrem Stutzen (5) verstellbaren Schraubring (15) vorgesehen ist und daß die zum Spannen der Spannzange (9) dienende, ihrerseits auf einem Gewinde angeordnete Schraubhülse (11) mit dem Schraubring (15) reibschlüssig derart gekuppelt ist, daß die Drehbewegung der Schraubhülse (11) zum Spannen der Spannzange (9) zu einer Verdrehung des Schraubringes (15) und einer Annäherung des Anschlages (13) an die Gehäusewand (4) führt, und daß die Schraubhülse (11) weiterverdrehbar ist, wenn der Schraubring (15) an der Gehäusewand (4) anschlägt.

2. Anschlußarmatur nach Anspruch 1, **dadurch gekennzeichnet, daß** die Schraubhülse (11) am in Einsteckrichtung vorderen Bereich, axial benachbart zu ihrem Gewinde, eine axial offene Ausnehmung (16) aufweist, die das dem Anschlag (13) abgewandte Ende oder eine dem Anschlag (13) abgewandte Fortsetzung (17) des Schraubringes (15) zumindest teilweise in axialer Richtung reibschlüssig übergreift.

3. Anschlußarmatur nach Anspruch 1 oder 2, **dadurch gekennzeichnet, daß** im Kupplungsbereich zwischen Schraubhülse (11) und Schraubring (15) ein die Reibkraft erhöhender oder erzeugender Dichtring oder O-Ring (18) angeordnet ist, der bei der gegenseitigen reibschlüssigen Berührung der Schraubhülse (11) und des Schraubringes (15) an beiden Teilen anliegt.

4. Anschlußarmatur nach einem der Ansprüche 1 bis 3, **dadurch gekennzeichnet, daß** die Ausnehmung (16) an der Schraubhülse (11) ein ihrem Innengewinde benachbarter zylindrischer Hohlraum ist.

5. Anschlußarmatur nach einem der Ansprüche 1 bis 4, **dadurch gekennzeichnet, daß** das Gewinde für den den Anschlag (13) aufweisenden Schraubring (15) in axialer Richtung kürzer als das Gewinde für die Schraubhülse (15) zum Anziehen der Spannzange (9) ist und daß der Anschlag (13) seine Gebrauchsstellung bei der gemeinsamen Verdrehung erreicht, bevor die Spannzange (9) gespannt ist.

6. Anschlußarmatur nach einem der Ansprüche 1 bis 5, **dadurch gekennzeichnet, daß** sie mit dem Stutzen (5) und den Gewinden für den Schraubring (15) und für die Schraubhülse (11) einstückig ist und daß die koaxial zueinander angeordneten Gewinde für die Schraubhülse (11) und für den Schraubring (15) gegensinnig zueinander verlaufen.

7. Anschlußarmatur nach Anspruch 6, **dadurch gekennzeichnet, daß** das an der Anschlußarmatur (1) vorgesehene Gewinde für die Schraubhülse (11) ein Rechtsgewinde und das Gewinde für den den Anschlag (13) aufweisenden Schraubring (15) ein Linksgewinde sind.

8. Anschlußarmatur nach Anspruch 6 oder 7, **dadurch gekennzeichnet, daß** zwischen den beiden gegensinnigen Gewinden ein radial vorstehender, in axialer Richtung wirkender Anschlagvorsprung (19) für die Schraubhülse (11) und/oder für den Schraubring (15) vorgesehen ist und daß die Schraubhülse (11) und der Schraubring (15) in einer Ausgangsstellung insbesondere beide an diesem Anschlagvorsprung (19) anliegen und durch Verdrehen der Schraubhülse (11) gemeinsam in entgegengesetzten Richtungen von diesem Anschlagvorsprung (19) wegbewegbar sind.

9. Anschlußarmatur nach einem der Ansprüche 1 bis 8, **dadurch gekennzeichnet, daß** die Schraubhülse (11) in Ausgangsstellung mit dem in ihrem Inneren angeordneten Ende ihrer den Schraubring (15) übergreifenden Ausnehmung (16), insbesondere mit einem etwa radial angeordneten Boden oder Absatz (16a) an dem Anschlagvorsprung (19) der Anschlußarmatur (1) anliegt.

10. Anschlußarmatur nach einem der Ansprüche 1 bis 9, **dadurch gekennzeichnet, daß** die mit dem Schraubring (15) reib- oder kraftschlüssig verbundene Schraubhülse (11) in Ausgangsstellung zu einem von ihr zu beaufschlagenden Vorsprung oder Bund (20) an der Spannzange (9) einen axialen Abstand A hat.

11. Anschlußarmatur nach einem der Ansprüche 1 bis 10, **dadurch gekennzeichnet, daß** der den Schraubring (15) in axialer Richtung übergreifende Teil der Schraubhülse (11) so kurz bemessen ist, daß nach einer Verstellung des Schraubringes (15) in seine Anschlagposition der übergreifende oder reibende Bereich von der Schraubhülse (11) freigegeben ist.

12. Anschlußarmatur nach einem der Ansprüche 1 bis 11, **dadurch gekennzeichnet, daß** die Schraubhülse (11) an ihrer Außenseite profiliert und/oder aufgerauht und insbesondere von Hand betätigbar ist.

13. Anschlußarmatur nach einem der Ansprüche 1 bis 12, **dadurch gekennzeichnet, daß** der Schraubring (15) an seiner Außenseite eine radial offene Nut oder Kammer (21) aufweist, die von der Schraubhülse (11) zumindest in Ausgangslage und während der gemeinsamen Schraubbewegung übergriffen ist, und daß in dieser Nut oder Kammer (21) der die Reibkraft bewirkende oder verstärkende Dicht- oder O-Ring (18) angeordnet ist.

14. Anschlußarmatur nach einem der Ansprüche 1 bis 13, **dadurch gekennzeichnet, daß** die Spannzange (9) die Anschlußarmatur (1) und den Gewindebereich für den Schraubring (15) auf der an der der Öffnung (4) abgewandten Seite axial überragt und zumindest in diesem überstehenden Bereich (9a) selbst ein Außengewinde für den Angriff der Schraubhülse (11) hat und daß das Außengewinde der Spannzange (9) für die Schraubhülse (11) und das Außengewinde der Anschlußarmatur (1) für den Schraubring (15) unterschiedliche Durchmesser haben und gleichsinnig, insbesondere Rechtsgewinde, sind.

15. Anschlußarmatur nach einem der vorstehenden Ansprüche, **dadurch gekennzeichnet, daß** der die Ausnehmung (16) zum Übergreifen des Schraubringes (15) axial begrenzende Boden oder Absatz (16a) der Schraubhülse (11) die dem Anschlag (13) an dem Schraubring (15) abgewandte Stirnseite reibschlüssig berührt.

16. Anschlußarmatur nach Anspruch 15, **dadurch gekennzeichnet, daß** zwischen dem Absatz (16a) der Ausnehmung der Schraubhülse (11) und der dem Anschlag (13) abgewandten Stirnseite des Schraubringes (15) ein die Reibkraft erzeugender oder erhöhender Dichtring oder O-Ring (18) angeordnet ist.

17. Anschlußarmatur nach einem der Ansprüche 1 bis 16, **dadurch gekennzeichnet, daß** der den Anschlag (13) aufweisende und zum Ausgleich der Wanddicke an der Öffnung (3) dienende Schraubring (15) an seiner Außenseite profiliert und/oder aufgerauht und zum Lösen aus seiner Anschlagposition insbesondere von Hand verdrehbar ist.

18. Anschlußarmatur nach Anspruch 17, **dadurch gekennzeichnet, daß** die Profilierung an einem Außenbereich des Schraubringes (15) angeordnet ist, der dem von der Schraubhülse (11) übergriffenen Bereich in axialer Richtung benachbart ist.

19. Anschlußarmatur nach einem der vorstehenden Ansprüche, **dadurch gekennzeichnet, daß** die Schraubhülse (11) eine Mutter, insbesondere eine Hutmutter ist.

## Claims

1. Connecting fitting (1) for securing elongate bodies such as cables (2), hoses, tubes, corrugated tubes or the like in an opening (3), particularly in a cutout or opening in a wall (4) of a housing, the connecting fitting (1) comprising a connector (5) which protrudes axially in the direction of insertion and engages in the opening (3) in the position of use, said connector being subdivided into retaining tongues by slots (6) extending substantially in the axial direction, a gripping member (9) protruding axially through and beyond said connector (5) and widening out behind it in the direction of insertion, said gripping member being radially compressible by a movement of withdrawal of a sloping surface (10) through the inside of the connector (5) which is narrower than it, a collet (11) being provided on the outside of said gripping member (9) for the purpose of withdrawing it, while additionally a stop (13) is provided on that edge (12) of the opening (3) provided in the wall (4) of a housing or the like which faces the direction of insertion, said stop (13) exerting a clamping force on this edge (12), **characterised in that** the connector (5) of the,connecting fitting (1) comprises, on its region which is located behind the opening (3) in the direction of insertion in the position of use, radially extending retaining projections (8) which engage behind the edge (14) of the opening (3), **in that** the stop (13) is provided on a screw ring (15) which is adjustable by means of a thread relative to the connecting fitting (1) and its connector (5), and **in that** the collet (11) serving to tighten the gripping member (9) and itself mounted on a thread is frictionally coupled to the screw ring (15) such that the rotary movement of the collet (11) for tightening the gripping member (9) causes the screw ring (15) to rotate and the stop (13) to move closer to the housing wall (4), and **in that** the collet (11) can be further rotated when the screw ring (15) makes contact with the housing wall (4).

2. Connecting fitting according to claim 1, **characterised in that** the collet (11) comprises, in its front region in the direction of insertion, axially adjacent to its thread, an axially open recess (16) which frictionally at least partially axially overlaps the end remote from the stop (13) or an extension (17) of the screw ring (15) remote from the stop (13).

3. Connecting fitting according to claim 1 or 2, **characterised in that** in the coupling region between the collet (11) and screw ring (15) is mounted a gasket or O-ring (18) which increases or generates frictional force and which abuts on both components where there is mutual frictional contact between the collet (11) and screw ring (15).

4. Connecting fitting according to one of claims 1 to 3, **characterised in that** the recess (16) on the collet (11) is a cylindrical cavity adjacent to the internal thread thereof.

5. Connecting fitting according to one of claims 1 to 4, **characterised in that** the thread for the screw ring (15) comprising the stop (13) is axially shorter than the thread for the collet (15) for tightening the gripping member (9) and **in that** during the joint rotation the stop (13) reaches its operating position before the gripping member (9) is tightened.

6. Connecting fitting according to one of claims 1 to 5, **characterised in that** it is integral with the connector (5) and the threads for the screw ring (15) and for the collet (11) and **in that** the threads for the collet (11) and for the screw ring (15), which are arranged coaxially with one another, run in opposite directions from one another.

7. Connecting fitting according to claim 6, **characterised in that** the thread for the collet (11) provided on the connecting fitting (1) is a right-handed thread and the thread for the screw ring (15) comprising the stop (13) is a left-handed thread.

8. Connecting fitting according to claim 6 or 7, **characterised in that** a radially projecting, axially acting stop projection (19) for the collet (11) and/or for the screw ring (15) is provided between the two threads running in opposite directions and **in that** the collet (11) and the screw ring (15) both abut on this stop projection (19) in an initial position, in particular, and can be jointly moved away from this stop projection (19) in opposite directions by turning the collet (11).

9. Connecting fitting according to one of claims 1 to 8, **characterised in that** in the initial position the collet (11) abuts on the stop projection (19) of the connecting fitting (1) by means of the inner end of its recess (16) engaging over the screw ring (15), particularly with a substantially radially disposed base or step (16a).

10. Connecting fitting according to one of claims 1 to 9, **characterised in that** in the initial position the collet (11) frictionally or tensionally connected to the screw ring (15) is at an axial spacing A from a projection or flange (20) on the gripping member (9) acting upon it.

11. Connecting fitting according to one of claims 1 to 10, **characterised in that** the part of the collet (11) which overlaps the screw ring (15) in the axial direction is short enough so that after the screw ring (15) has been moved into its position of abutment the overlapping or frictional portion is freed from the collet (11).

12. Connecting fitting according to one of claims 1 to 11, **characterised in that** the collet (11) is profiled and/or roughened on its exterior and in particular can be operated by hand.

13. Connecting fitting according to one of claims 1 to 12, **characterised in that** the screw ring (15) has on its exterior a radially open groove or chamber (21) which is overlapped by the collet (11) at least in the initial position and throughout the entire screwing motion, and **in that** the gasket or O-ring (18) which brings about or intensifies the frictional force is located in this groove or chamber (21).

14. Connecting fitting according to one of claims 1 to 13, **characterised in that** the gripping member (9) projects axially over the connecting fitting (1) and the threaded portion for the screw ring (15) on the side remote from the opening (4) and at least in this projecting area (9a) itself has an external thread for the engagement of the collet (11) and **in that** the external thread of the gripping member (9) for the collet (11) and the external thread of the connecting fitting (1) for the screw ring (15) have different diameters and run in the same direction, more particularly are right-handed.

15. Connecting fitting according to one of the preceding claims, **characterised in that** the base or step (16a) of the collet (11) which axially delimits the recess (16) for overlapping the screw ring (15) makes frictionally locking contact with the end face remote from the stop (13) on the screw ring (15).

16. Connecting fitting according to claim 15, **characterised in that** between the step (16a) of the recess in the collet (11) and the end face of the screw ring (15) remote from the stop (13) there is provided a gasket or O-ring (18) which produces or increases the frictional force.

17. Connecting fitting according to one of claims 1 to 16, **characterised in that** the screw ring (15) which comprises the stop (13) and serves to equalise the wall thickness at the opening (3) is profiled and/or roughened on its exterior and can be turned, particularly by hand, to release it from its position of abutment.

18. Connecting fitting according to claim 17, **characterised in that** the profiling is provided on an outer portion of the screw ring (15) which is axially adjacent to the area overlapped by the collet (11).

19. Connecting fitting according to one of the preceding claims, **characterised in that** the collet (11) is a nut, particularly a cap nut.

## Revendications

1. Dispositif de raccordement (1) pour fixer à un orifice (3), notamment à un perçage ou à un trou pratiqué dans une paroi (4) d'un boîtier, des objets allongés comme, par exemple, des câbles (2), des tuyaux souples, des tubulures, des flexibles annelés ou objets similaires, ledit dispositif de raccordement (1) comportant un manchon (5) qui fait saillie axialement dans la direction d'emboîtement, pénètre dans l'orifice (3) en position d'utilisation, est scindé en des languettes de retenue, par des fentes (6) s'étendant sensiblement dans le sens axial, et à travers lequel dépasse une pince de serrage (9) qui déborde dans le sens axial au-delà de ce manchon (5), s'élargit derrière celui-ci dans la direction d'insertion, et peut être comprimée radialement par un mouvement de retrait, à l'aide d'une surface inclinée (10), par l'intermédiaire de la face intérieure dudit manchon (5), plus étroite que ladite pince, sachant qu'une douille filetée (11), disposée sur la face extérieure de la pince de serrage (9), est prévue pour rétracter ladite pince, et sachant par ailleurs qu'une butée (13) située sur le bord (12), tourné vers la direction d'emboîtement, de l'orifice (3) prévu dans la paroi (4) d'un boîtier ou d'un élément similaire, applique une force de coincement à ce bord (12) de l'orifice, **caractérisé par le fait que** le manchon (5) du dispositif de raccordement (1) présente, dans sa région située derrière l'orifice (3) dans la direction d'emboîtement, en position d'utilisation, des protubérances d'arrêt (8) saillant radialement et emprisonnant par-derrière le bord (14) dudit orifice (3) ; **par le fait que** la butée (13) est prévue sur une bague filetée (15) pouvant être réglée, par filetage, vis-à-vis dudit dispositif de raccordement (1) et de son manchon (5) ; et **par le fait que** la douille filetée (11), servant à serrer la bague de serrage (9) et disposée à son tour sur un filetage, est solidarisée par frottement avec la bague filetée (15) de façon telle que le mouvement rotatoire de ladite douille filetée (11), en vue de serrer ladite pince de serrage (9), se traduise par une rotation de la bague filetée (15) et par un rapprochement de la butée (13) vers la paroi (4) du boîtier, et que ladite douille filetée (11) puisse continuer de tourner lorsque ladite bague filetée (15) bute contre ladite paroi (4) du boîtier.

2. Dispositif de raccordement selon la revendication 1, **caractérisé par le fait que** la douille filetée (11) comporte dans la région antérieure dans la direction d'emboîtement, axialement au voisinage de son filetage, un évidement (16) ouvert axialement et coiffant au moins partiellement par frottement, dans le sens axial, l'extrémité tournée à l'opposé de la butée (13), ou un prolongement (17) de la bague filetée (15) tourné à l'opposé de ladite butée (13).

3. Dispositif de raccordement selon la revendication 1 ou 2, **caractérisé par le fait qu'**une bague d'étanchement ou bague torique (18) accroissant ou engendrant la force de frottement, située dans la zone d'accouplement entre la douille filetée (11) et la bague filetée (15), est appliquée contre ladite douille filetée (11) et contre ladite bague filetée (15) lorsque ces deux pièces entrent mutuellement en contact par frottement.

4. Dispositif de raccordement selon l'une des revendications 1 à 3, **caractérisé par le fait que** l'évidement (16), pratiqué dans la douille filetée (11), est une cavité cylindrique voisine du filetage intérieur de ladite douille.

5. Dispositif de raccordement selon l'une des revendications 1 à 4, **caractérisé par le fait que** le filetage affecté à la bague filetée (15) munie de la butée (13) est plus court, dans la direction axiale, que le filetage affecté à la douille filetée (11) destinée au blocage de la pince de serrage (9) ; et **par le fait que** la butée (13) atteint sa position d'utilisation, lors de la rotation commune, avant que ladite pince de serrage (9) soit serrée.

6. Dispositif de raccordement selon l'une des revendications 1 à 5, **caractérisé par le fait qu'**il constitue un seul tenant avec le manchon (5) et les filetages affectés à la bague filetée (15) et à la douille filetée (11) ; et **par le fait que** lesdits filetages affectés à ladite douille filetée (11) et à ladite bague filetée (15), agencés coaxialement l'un à l'autre, s'étendent en sens inverse l'un de l'autre.

7. Dispositif de raccordement selon la revendication 6, **caractérisé par le fait que** le filetage, prévu sur ledit dispositif de raccordement (1) pour la douille filetée (11), est un filetage à droite, et le filetage affecté à la bague filetée (15), munie de la butée (13), est un filetage à gauche.

8. Dispositif de raccordement selon la revendication 6 ou 7, **caractérisé par le fait qu'**une protubérance de butée (19), dépassant radialement et agissant dans le sens axial, est prévue pour la douille filetée (11) et/ou pour la bague filetée (15) entre les deux filetages à pas inversés ; et **par le fait que**, dans une position initiale, ladite douille filetée (11) et ladite bague filetée (15) portent notamment l'une et l'autre contre cette protubérance de butée (19) et peuvent être conjointement éloignées de cette protubérance de butée (19), dans des directions opposées, par rotation de ladite douille filetée (11).

9. Dispositif de raccordement selon l'une des revendications 1 à 8, **caractérisé par le fait que** la douille filetée (11) est appliquée en position initiale contre la protubérance de butée (19) dudit dispositif de raccordement (1), par l'extrémité située dans son espace interne et appartenant à son évidement (16) coiffant la bague filetée (15), notamment par un fond ou un gradin (16a) occupant une position sensiblement radiale.

10. Dispositif de raccordement selon l'une des revendications 1 à 9, **caractérisé par le fait que** la douille filetée (11) reliée à la bague filetée (15) par frottement ou par assemblage mécanique présente, en position initiale, une distance axiale A vis-à-vis d'une protubérance ou d'une collerette (20) située sur la pince de serrage (9) et devant être sollicitée par ladite douille.

11. Dispositif de raccordement selon l'une des revendications 1 à 10, **caractérisé par le fait que** la partie de la douille filetée (11), coiffant la bague filetée (15) dans le sens axial, possède un dimensionnement court ayant pour effet, après un déplacement de ladite bague filetée (15) jusqu'à sa position de venue en butée, de dissocier ladite douille filetée (11) d'avec la région faisant saillie ou exerçant un frottement.

12. Dispositif de raccordement selon l'une des revendications 1 à 11, **caractérisé par le fait que** la douille filetée (11) est profilée et/ou rendue rugueuse sur sa face extérieure, et peut notamment être actionnée à la main.

13. Dispositif de raccordement selon l'une des revendications 1 à 12, **caractérisé par le fait que** la bague filetée (15) présente, sur sa face extérieure, une rainure ou une chambre (21) ouverte dans le sens radial et coiffée par la douille filetée (11), au moins en position initiale et lors du mouvement de vissage commun ; et **par le fait que** la bague d'étanchement ou bague torique (18), développant ou amplifiant la force de frottement, est logée dans cette rainure ou cette chambre (21).

14. Dispositif de raccordement selon l'une des revendications 1 à 13, **caractérisé par le fait que** la pince de serrage (9) fait saillie axialement au-delà dudit dispositif de raccordement (1) et de la région filetée affectée à la bague filetée (15), du côté tourné à l'opposé de l'orifice (3), et est munie, au moins dans cette région saillante (9a) proprement dite, d'un filetage extérieur destiné à la venue en prise de la douille filetée (11) ; et **par le fait que** le filetage extérieur de la pince de serrage (9), affecté à la douille filetée (11), et le filetage extérieur du dispositif de raccordement (1), affecté à la bague filetée (15), possèdent des diamètres différents et sont des filetages à pas identiques, notamment des filetages à droite.

15. Dispositif de raccordement selon l'une des revendications précédentes, **caractérisé par le fait que** le fond ou le gradin (16a) de la douille filetée (11), délimitant axialement l'évidement (16) conçu pour venir coiffer la bague filetée (15), est en contact par frottement avec la face extrême tournée à l'opposé de la butée (13) solidaire de ladite bague filetée (15).

16. Dispositif de raccordement selon la revendication 15, **caractérisé par le fait qu'**une bague d'étanchement ou bague torique (18), développant ou amplifiant la force de frottement, est interposée entre le gradin (16a) de l'évidement de la douille filetée (11) et la face extrême de la bague filetée (15) qui est tournée à l'opposé de la butée (13).

17. Dispositif de raccordement selon l'une des revendications 1 à 16, **caractérisé par le fait que** la bague filetée (15), présentant la butée (13) et servant à compenser l'épaisseur de la paroi, au niveau de l'orifice (3), est profilée et/ou rendue rugueuse à sa face extérieure, et peut notamment être animée d'une rotation manuelle pour lui faire quitter sa position de butée.

18. Dispositif de raccordement selon la revendication 17, **caractérisé par le fait que** le profilage est situé dans une région extérieure de la bague filetée (15) qui est voisine, dans le sens axial, de la région coiffée par la douille filetée (11).

19. Dispositif de raccordement selon l'une des revendications précédentes, **caractérisé par le fait que** la douille filetée (11) est un écrou, en particulier un capuchon taraudé.
